# EUROPÄISCHE PATENTSCHRIFT

(11) **EP 3 181 281 B1**
(45) Veröffentlichungstag und Bekanntmachung des Hinweises auf die Patenterteilung: **09.01.2019**
(21) Anmeldenummer: 16195294.0
(22) Anmeldetag: 24.10.2016
(51) Int. Cl.: B23D 49/16, F16H 25/14

(54) **GETRIEBEVORRICHTUNG**
TRANSMISSION DEVICE
TRANSMISSION

(30) Priorität: 16.12.2015 DE 102015225381
(43) Veröffentlichungstag der Anmeldung: 21.06.2017
(73) Patentinhaber: ROBERT BOSCH GMBH, 70442 Stuttgart (DE)
(72) Erfinder: Laett, Michael, 4500 Solothurn (CH); Saegesser, Daniel, 4900 Langenthal (CH)

(56) Entgegenhaltungen:
- GB-A- 891 832
- US-A- 3 971 132
- US-A1- 2004 117 993
- US-A1- 2011 265 335

## Beschreibung

### Stand der Technik

Es ist bereits eine Getriebevorrichtung zu einer Erzeugung einer Hub- und/oder Pendelbewegung eines Einsatzwerkzeugs einer Handwerkzeugmaschine, mit zumindest einer Kulisseneinheit zu einer Erzeugung der Hubbewegung, die zumindest ein Abtriebselement mit zumindest einer Kontaktfläche, die zumindest teilweise an dem zumindest einen Abtriebselement angeordnet ist, und zumindest ein Kulissenelement, das über die zumindest eine Kontaktfläche mit dem zumindest einen Abtriebselement zusammenwirkt, umfasst, vorgeschlagen worden. Siehe zum Beispiel US2011/265335 A1, oder US2004/117993 A1.

### Offenbarung der Erfindung

Die Erfindung geht aus von einer Getriebevorrichtung zu einer Erzeugung einer Hub- und/oder Pendelbewegung eines Einsatzwerkzeugs einer Handwerkzeugmaschine, mit zumindest einer Kulisseneinheit zu einer Erzeugung der Hubbewegung, die zumindest ein Abtriebselement mit zumindest einer Kontaktfläche, die zumindest teilweise an dem zumindest einen Abtriebselement angeordnet ist, und zumindest ein Kulissenelement, das über die zumindest eine Kontaktfläche mit dem zumindest einen Abtriebselement zusammenwirkt, umfasst.

Es wird vorgeschlagen, dass die zumindest eine Kulisseneinheit zumindest eine weitere Kontaktfläche zu einer Erzeugung einer Kraftkomponente zu einer Einleitung der Pendelbewegung umfasst, die zumindest teilweise an dem zumindest einen Abtriebselement angeordnet ist. Dadurch können eine vorteilhaft kompakte Ausgestaltung der Getriebevorrichtung und somit eine bevorzugt schlanke Ausgestaltung der Handwerkzeugmaschine, insbesondere mit einem vorteilhaft geringen Gehäusedurchmesser in einem Halsbereich der Handwerkzeugmaschine, erreicht werden.

Unter einer "Kulisseneinheit" soll in diesem Zusammenhang insbesondere eine Einheit verstanden werden, die dazu vorgesehen ist, eine Drehbewegung in eine translatorische Bewegung umzusetzen. Die zumindest eine Kulisseneinheit ist zu einer Übersetzung einer rotatorischen Antriebsbewegung einer Antriebseinheit der Handwerkzeugmaschine zumindest in eine translatorische Hubbewegung des Einsatzwerkzeugs der Handwerkzeugmaschine vorgesehen. Das zumindest eine Kulissenelement der zumindest einen Kulisseneinheit begrenzt vorzugsweise zumindest teilweise zumindest eine Kulissenbahn, wobei unter einer "Kulissenbahn" insbesondere eine Bahn zu einer zumindest einseitigen, vorzugsweise zu einer beidseitigen, Zwangsführung eines Elements verstanden werden soll. Die zumindest eine Kulissenbahn, die zumindest teilweise von dem zumindest einen Kulissenelement begrenzt wird, ist vorzugsweise als Steg, Schlitz und/oder Nut ausgebildet. Das in der Kulissenbahn geführte Element ist vorzugsweise von dem zumindest einen Abtriebselement gebildet, das in die zumindest eine Kulissenbahn eingreift. Das zumindest eine Kulissenelement ist in einem montierten Zustand der Getriebevorrichtung insbesondere direkt mit einer Hubstange zur Weiterleitung der Hubbewegung an das Einsatzwerkzeug verbunden. Das zumindest eine Kulissenelement ist in einem montierten Zustand der Getriebevorrichtung fest mit einer Hubstange verbunden. Das zumindest eine Kulissenelement ist in einem montierten Zustand der Getriebevorrichtung durch eine Schweißverbindung mit einer Hubstange verbunden. Das Einsatzwerkzeug ist vorzugsweise von einem Sägeblatt, insbesondere von einem Säbelsägeblatt, gebildet.

Das zumindest eine Abtriebselement ist vorzugsweise von einem Abtriebsbolzen gebildet. Die zumindest eine, an dem zumindest einen Abtriebselement angeordnete Kontaktfläche ist vorteilhafterweise als radiale Kontaktfläche ausgebildet. Die zumindest eine, an dem zumindest einen Abtriebselement angeordnete Kontaktfläche ist besonders bevorzugt zu einer direkten Kontaktierung des zumindest einen Kulissenelements, insbesondere der zumindest einen, von dem zumindest einen Kulissenelement begrenzten Kulissenbahn, vorgesehen. Das zumindest eine Abtriebselement ist in einem Betriebszustand vorzugsweise relativ zu dem zumindest einen Kulissenelement bewegbar gelagert. An dem zumindest einen Abtriebselement ist vorzugsweise zumindest ein Wälzelement angeordnet, das zumindest teilweise die zumindest eine Kontaktfläche bildet und das das zumindest eine Kulissenelement vorteilhafterweise kontaktiert. Das zumindest eine Abtriebselement ist vorzugsweise fest mit einem Getriebeelement der Getriebevorrichtung verbunden. Das Getriebeelement ist vorzugsweise von einem Tellerrad gebildet, das in einem montierten Zustand der Getriebevorrichtung von der Antriebseinheit der Handwerkzeugmaschine vorteilhaft rotierend antreibbar ausgebildet ist. Das zumindest eine Abtriebselement ist insbesondere exzentrisch zu einer Drehachse des Getriebeelements angeordnet.

Die zumindest eine weitere, an dem zumindest einen Abtriebselement angeordnete Kontaktfläche ist vorteilhafterweise als axiale oder stirnseitig an dem zumindest einen Abtriebselement angeordnete Kontaktfläche ausgebildet. Die zumindest eine Kontaktfläche zur Erzeugung der Hubbewegung und die zumindest eine weitere Kontaktfläche zur Erzeugung der Pendelbewegung sind vorzugsweise zumindest teilweise, besonders bevorzugt vollständig räumlich getrennt an dem zumindest einen Abtriebselement angeordnet.

Ferner wird vorgeschlagen, dass die zumindest eine Kulisseneinheit zumindest ein drehbar gelagertes Wälzelement umfasst, das zumindest teilweise die zumindest eine Kontaktfläche zu einer Erzeugung einer Kraftkomponente zu einer Einleitung der Pendelbewegung bildet. Dadurch kann auf konstruktiv einfache Weise eine bevorzugt verschleißarme Ausgestaltung der zumindest einen Kontaktfläche zu einer Erzeugung einer Kraftkomponente zu einer Einleitung der Pendelbewegung erreicht werden. Unter "drehbar gelagert" soll in diesem Zusammenhang insbesondere verstanden werden, dass das zumindest eine Wälzelement um eine Achse bewegbar gelagert ist. Das zumindest eine Wälzelement ist vorzugsweise an dem zumindest einen Abtriebselement drehbar gelagert. Es ist jedoch auch denkbar, dass die zumindest eine Kontaktfläche zur Erzeugung der Pendelbewegung direkt von einem Teilbereich des zumindest einen Abtriebselements gebildet wird.

Des Weiteren wird vorgeschlagen, dass das zumindest eine Wälzelement um eine Achse, die senkrecht zu einer Längsrichtung des zumindest einen Abtriebselements angeordnet ist, drehbar gelagert ist. Dadurch kann eine bevorzugt kompakte Ausgestaltung der Getriebevorrichtung zur Erzeugung der Pendelbewegung erreicht werden. Die Achse, um die das zumindest eine Wälzelement drehbar gelagert ist, ist in einem montierten Zustand der Getriebevorrichtung senkrecht zu einer Rotationsachse des Getriebeelements, mit dem das zumindest eine Abtriebselement fest verbunden ist, angeordnet. Die Achse, um die das zumindest eine Wälzelement drehbar gelagert ist, ist in einem montierten Zustand der Getriebevorrichtung senkrecht zu einer Hubrichtung der Hubbewegung, die über die zumindest eine radiale Kontaktfläche erzeugt wird, angeordnet.

Zudem wird vorgeschlagen, dass das zumindest eine Wälzelement von einer Kugelhülse gebildet ist. Dadurch kann eine konstruktiv einfache und vorteilhaft kostengünstige und bevorzugt langlebige Ausgestaltung des zumindest einen Wälzelements erreicht werden. Alternativ ist es auch denkbar, dass das zumindest eine Wälzelement zumindest teilweise als Tonnenrolle ausgebildet ist. Das zumindest eine Wälzelement ist vorzugsweise auf ein Lager, insbesondere auf ein Kugellager, aufgepresst ausgebildet.

Ferner wird vorgeschlagen, dass die Getriebevorrichtung zumindest ein Lagerelement zu einer Lagerung des zumindest einen Kulissenelements aufweist, an dem zumindest eine Kontaktfläche angeordnet ist, die in zumindest einem Antriebsmodus die an dem zumindest einen Abtriebselement angeordnete Kontaktfläche zur Erzeugung einer Kraftkomponente zu einer Einleitung der Pendelbewegung zumindest teilweise kontaktiert. Dadurch kann eine vorteilhaft kompakte Ausgestaltung zur Einleitung und Weiterleitung der Pendelbewegung auf das Einsatzwerkzeug, insbesondere über die Hubstange, erreicht werden. Das zumindest eine Lagerelement ist vorzugsweise zu einer indirekten Lagerung des zumindest einen Kulissenelements zumindest über die Hubstange der Handwerkzeugmaschine vorgesehen. Das zumindest eine Lagerelement ist vorzugsweise dazu vorgesehen, das zumindest eine Kulissenelement, insbesondere parallel zur Hubrichtung, verschiebbar zu lagern. Das zumindest eine Lagerelement ist vorzugsweise als Lagerwippe ausgebildet. Das zumindest eine Lagerelement ist in einem montierten Zustand der Getriebevorrichtung vorteilhafterweise relativ zu einem Gehäuse der Handwerkzeugmaschine zumindest teilweise schwenkbar gelagert. Die zumindest eine am zumindest einen Lagerelement angeordnete Kontaktfläche ist vorzugsweise als Ebene ausgebildet. Die zumindest eine am zumindest einen Lagerelement angeordnete Kontaktfläche ist vorzugsweise schräg zu einer Hubrichtung und/oder zu einer Längsrichtung des zumindest einen Abtriebselements angeordnet. Die zumindest eine am zumindest einen Lagerelement angeordnete Kontaktfläche ist zu einer direkten Kontaktierung der zumindest einen am zumindest einen Abtriebselement angeordneten Kontaktfläche vorgesehen. Das zumindest eine Wälzelement rollt in einem Betriebszustand vorzugsweise auf der zumindest einen am zumindest einen Lagerelement angeordneten Kontaktfläche zumindest teilweise und/oder zumindest temporär ab.

Des Weiteren wird vorgeschlagen, dass die zumindest eine an dem zumindest einen Lagerelement angeordnete Kontaktfläche um zumindest eine Achse geneigt ist, wobei die Achse in einer Ebene verläuft, deren Flächennormale parallel zu einer Längsrichtung des zumindest einen Abtriebselements angeordnet ist, und wobei die Achse schräg zu einer Hubrichtung verläuft. Dadurch kann erreicht werden, dass in einem Betriebszustand die Pendelbewegung des Einsatzwerkzeugs und die Hubbewegung des Einsatzwerkzeugs einen Umkehr- bzw. Totpunkt zumindest im Wesentlichen zeitversetzt durchlaufen, wodurch ein vorteilhaft gutes und präzises Schnittergebnis erreicht werden kann. Unter "schräg" soll in diesem Zusammenhang insbesondere verstanden werden, dass die Achse und die Hubrichtung einen Winkel einschließen, der mehr als 0 ° und weniger als 90 ° beträgt. Durch die schräge Anordnung der zumindest einen Kontaktfläche ist ein, in Längsrichtung des zumindest einen Abtriebselements betrachtet, höchster Kontaktpunkt der Kontaktfläche mit dem zumindest einen Wälzelement, quer zur Längsrichtung des zumindest einen Abtriebselements und quer zur Hubrichtung betrachtet, relativ zur Hubachse versetzt angeordnet.

Zudem wird vorgeschlagen, dass an dem zumindest einen Lagerelement zumindest ein Kontaktelement angeordnet ist, das zumindest teilweise die zumindest eine Kontaktfläche bildet. Dadurch kann eine vorteilhaft robuste Ausgestaltung der zumindest einen Kontaktfläche erreicht werden. Das zumindest eine Kontaktelement ist vorzugsweise scheibenförmig und besonders bevorzugt kreisringförmig ausgebildet. Das zumindest eine Kontaktelement ist vorzugsweise fest mit dem zumindest einen Lagerelement verbunden. Es ist jedoch auch denkbar, dass das zumindest eine Kontaktelement relativ zu dem zumindest einen Lagerelement drehbar gelagert ist. Dadurch könnte insbesondere auf das zumindest eine drehbar gelagerte Wälzelement, das die zumindest eine an dem zumindest einen Abtriebselement angeordnete Kontaktfläche zur Erzeugung der Pendelbewegung bildet, verzichtet werden.

Ferner wird vorgeschlagen, dass die Getriebevorrichtung zumindest eine Einstelleinheit zu einem Umschalten zwischen zumindest zwei Antriebsmodi zumindest teilweise durch eine Verschiebung des zumindest einen Lagerelements relativ zu dem zumindest einen Abtriebselement aufweist. Dadurch kann ene vorteilhaft flexible Einsetzbarkeit der Handwerkzeugmaschine, die die Getriebevorrichtung umfasst, erreicht werden. Vorzugsweise kann mittels der Einstelleinheit eine Pendelbewegung zumindest teilweise und/oder vorzugsweise vollständig zu- oder abgeschaltet werden. Die Einstelleinheit ist vorzugsweise von einem Bediener, insbesondere manuell, bedienbar ausgebildet. Das zumindest eine Lagerelement kann durch die Einstelleinheit vorzugsweise zumindest teilweise parallel zur Längsrichtung des zumindest einen Abtriebselements verschoben werden.

Des Weiteren wird vorgeschlagen, dass die Getriebevorrichtung zumindest ein Federelement umfasst, das das zumindest eine Lagerelement in zumindest eine parallel zu einer Längsrichtung des zumindest einen Abtriebselements verlaufende Richtung mit einer Kraft beaufschlagt. Dadurch können vorteilhaft geringe Vibrationen in einem Betriebszustand, insbesondere bei einem Ansägen, erreicht werden. Das zumindest eine Federelement ist vorzugsweise dazu vorgesehen, das zumindest eine Lagerelement zumindest teilweise zu einer Kontaktierung der Kontaktflächen zu dem zumindest einen Abtriebselement hin zu belasten, wodurch eine vorteilhaft zuverlässige Kontaktierung der Kontaktflächen auch bei einem Arbeiten "über Kopf" erreicht werden kann. Alternativ oder zusätzlich ist es denkbar, dass das zumindest eine Federelement vorzugsweise dazu vorgesehen ist, das zumindest eine Lagerelement zumindest teilweise entgegen der Verschieberichtung zum Umschalten zwischen den Antriebsmodi durch die zumindest eine Einstelleinheit zu belasten.

Zudem wird eine Handwerkzeugmaschine mit zumindest einer erfindungsgemäßen Getriebevorrichtung vorgeschlagen. Dadurch kann eine vorteilhaft schlanke Ausgestaltung der Handwerkzeugmaschine, insbesondere mit einem vorteilhaft geringen Gehäusedurchmesser in einem Halsbereich der Handwerkzeugmaschine, erreicht werden. Zudem kann auf konstruktiv einfache Weise eine vorteilhaft gute Abdichtung der Getriebevorrichtung innerhalb der Handwerkzeugmaschine gegen ein Eindringen von Staub erreicht und eine Verschmutzung der Getriebevorrichtung zumindest weitestgehend verhindert werden. Vorzugsweise ist die Handwerkzeugmaschine als Elektrohandwerkzeugmaschine ausgebildet. Die Handwerkzeugmaschine kann als Akkuhandwerkzeugmaschine oder netzbetriebene Handwerkzeugmaschine ausgebildet sein. Die Handwerkzeugmaschine ist besonders bevorzugt als Säbelsäge ausgebildet. Es ist jedoch auch eine Ausgestaltung als Stichsäge oder auf eine andere, einem Fachmann als sinnvoll erscheinende Weise denkbar. Vorzugsweise weist die Handwerkzeugmaschine einen EC-Motor auf.

Ferner wird ein Verfahren zu einer Erzeugung einer Hub- und/oder Pendelbewegung des Einsatzwerkzeugs einer Handwerkzeugmaschine durch die Getriebevorrichtung mit zumindest einem Schritt, in dem die Hubbewegung über die zumindest eine Kontaktfläche, die an zumindest einem Abtriebselement angeordnet ist, erzeugt wird und mit zumindest einem weiteren Schritt, in dem die Pendelbewegung über die zumindest eine weitere Kontaktfläche, die an dem zumindest einen Abtriebselement angeordnet ist, erzeugt wird, vorgeschlagen. Vorzugsweise werden die Schritte zumindest teilweise zeitgleich durchgeführt.

Die erfindungsgemäße Getriebevorrichtung soll hierbei nicht auf die oben beschriebene Anwendung und Ausführungsform beschränkt sein. Insbesondere kann die erfindungsgemäße Getriebevorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Handwerkzeugmaschine mit einer erfindungsgemäßen Getriebevorrichtung in einer Seitenansicht,
- Fig. 2: die Handwerkzeugmaschine mit der erfindungsgemäßen Getriebevorrichtung in einer Schnittansicht,
- Fig. 3: einen Teil der Handwerkzeugmaschine im Bereich der erfindungsgemäßen Getriebevorrichtung in einer Schnittansicht,
- Fig. 4: die erfindungsgemäße Getriebevorrichtung in einer Explosionsdarstellung,
- Fig. 5a: ein Abtriebselement der erfindungsgemäßen Getriebevorrichtung in einer perspektivischen Darstellung und
- Fig. 5b: das Abtriebselement der erfindungsgemäßen Getriebevorrichtung in einer Explosionsdarstellung.

### Beschreibung des Ausführungsbeispiels

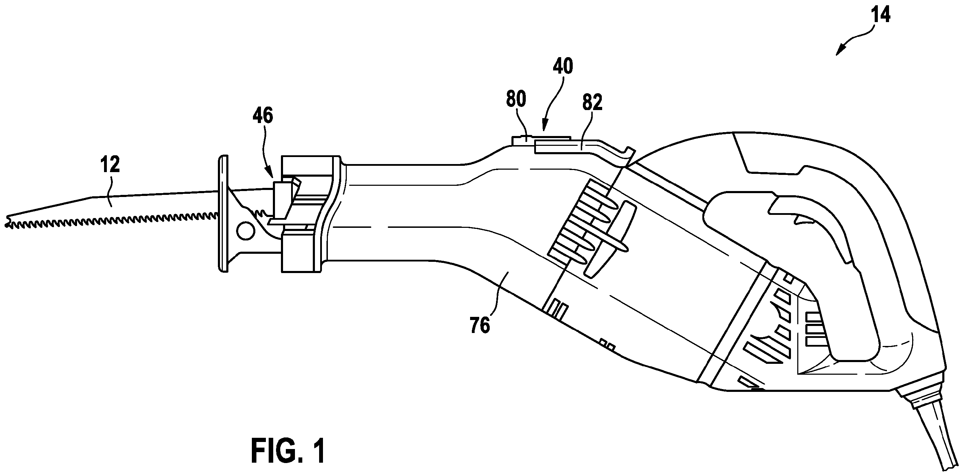

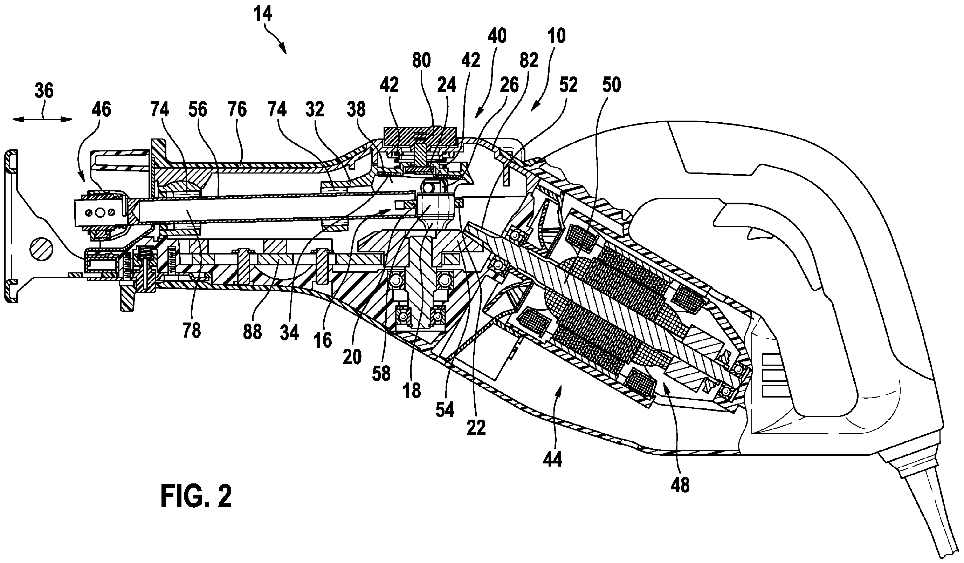

In Figur 1 ist eine als Säbelsäge ausgebildete Handwerkzeugmaschine 14 dargestellt. Die Handwerkzeugmaschine 14 ist als Elektrohandwerkzeugmaschine ausgebildet. Die Handwerkzeugmaschine 14 ist als netzbetriebene Handwerkzeugmaschine 14 ausgebildet und weist ein Stromkabel zur elektrischen Verbindung mit einem Stromnetz auf. Die Handwerkzeugmaschine 14 weist eine Gesamtmasse auf, die zwischen 3,7 kg und 4,2 kg beträgt. Die Handwerkzeugmaschine 14 kann alternativ auch als Akkuhandwerkzeugmaschine mit einer Akkuschnittstelle zur mechanischen und elektrischen Kopplung mit einem Akkupack ausgebildet sein. Die Handwerkzeugmaschine 14 weist eine Antriebseinheit 44 und eine Getriebevorrichtung 10 sowie eine Werkzeugaufnahme 46 auf (Figur 2). Die Antriebseinheit 44 umfasst einen Elektromotor 48. Der Elektromotor 48 ist als EC-Motor ausgebildet. Die Antriebseinheit 44 umfasst eine Abtriebswelle 50, die in einem Betriebszustand des Elektromotors 48 rotierend angetrieben wird. Die Abtriebswelle 50 der Antriebseinheit 44 weist an einem dem Elektromotor 48 abgewandten Ende eine Verzahnung 52 auf, die ein Antriebsritzel bildet. Die Verzahnung 52 der Abtriebswelle 50 bildet ein Kegelrad. Die Getriebevorrichtung 10 umfasst ein von einem Tellerrad gebildetes Getriebeelement 54, mit dem die Verzahnung 52 der Abtriebswelle 50 der Antriebseinheit 44 kämmt. In einem Betriebszustand des Elektromotors 48 wird die rotierende Bewegung der Abtriebswelle 50 über die Verzahnung 52 an das Getriebeelement 54 der Getriebevorrichtung 10 übertragen. Die Getriebevorrichtung 10 ist dazu vorgesehen, die rotierende Bewegung des Getriebeelements 54 in eine Hub- und/oder Pendelbewegung zu übersetzen, die an ein in der Werkzeugaufnahme 46 angeordnetes Einsatzwerkzeug 12 weitergegeben wird. Die Werkzeugaufnahme 46 ist über eine Hubstange 56 mit der Getriebevorrichtung 10 verbunden.

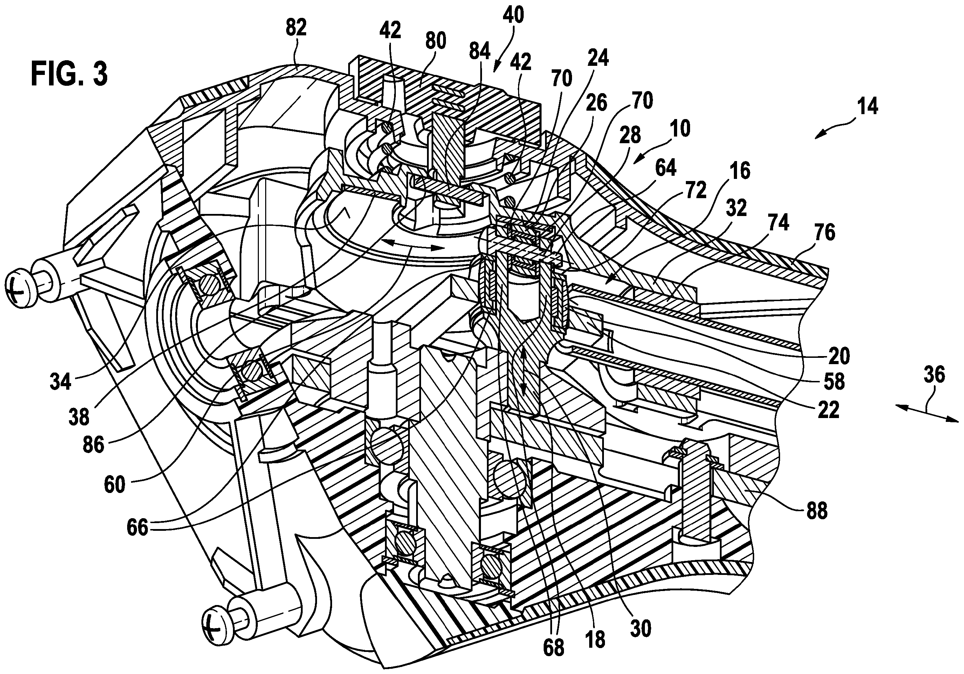

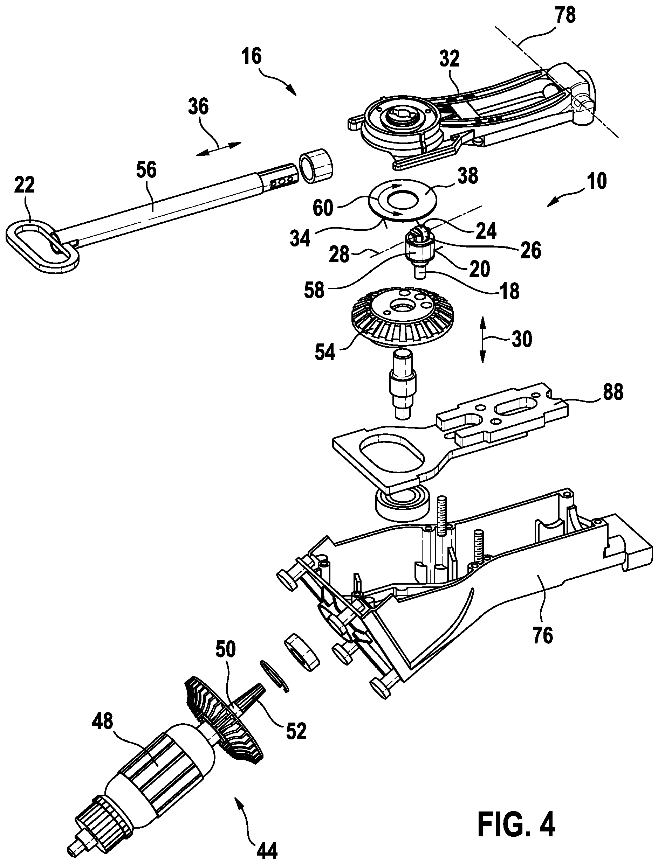

Die Getriebevorrichtung 10 ist in den Figuren 3 und 4 näher gezeigt. Die Getriebevorrichtung 10 ist zu einer Erzeugung der Hub- und/oder Pendelbewegung des Einsatzwerkzeugs 12 der Handwerkzeugmaschine 14 vorgesehen. Die Getriebevorrichtung 10 umfasst zumindest eine Kulisseneinheit 16 zumindest zu einer Erzeugung der Hubbewegung, die zumindest ein Abtriebselement 18 mit zumindest einer Kontaktfläche 20 aufweist, wobei die zumindest eine Kontaktfläche 20 zumindest teilweise an dem zumindest einen Abtriebselement 18 angeordnet ist. Ferner umfasst die zumindest eine Kulisseneinheit 16 zumindest ein Kulissenelement 22, das über die zumindest eine Kontaktfläche 20 mit dem zumindest einen Abtriebselement 18 zusammenwirkt. Die Getriebevorrichtung 10 weist genau eine Kulisseneinheit 16 mit genau einem Abtriebselement 18 und mit genau einem Kulissenelement 22 auf. Es ist jedoch auch eine abweichende, einem Fachmann als sinnvoll erscheinende Anzahl der Kulisseneinheit 16, des Abtriebselements 18 und/oder des Kulissenelements 22 denkbar. Das Kulissenelement 22 bildet eine Kulissenbahn, entlang der das Abtriebselement 18 in einem Betriebszustand bewegbar ist. Das Kulissenelement 22 bildet eine längliche Kulissenbahn, deren kleinste Erstreckung zumindest nahezu einem Durchmesser des Abtriebselements 18 entspricht. Das Kulissenelement 22 ist mit der Hubstange 56 gekoppelt. Das Kulissenelement 22 ist fest mit der Hubstange 56 verbunden. Das Kulissenelement 22 ist mit der Hubstange 56 verschweißt. Das Kulissenelement 22 und die Hubstange 56 sind aus Metall gebildet. Die Getriebevorrichtung 10 umfasst ferner ein Ausgleichsmassenelement 88, das zu einem Ausgleich einer Masse der Hubstange 56 vorgesehen und ebenfalls über das Getriebeelement 54 antreibbar ausgebildet ist.

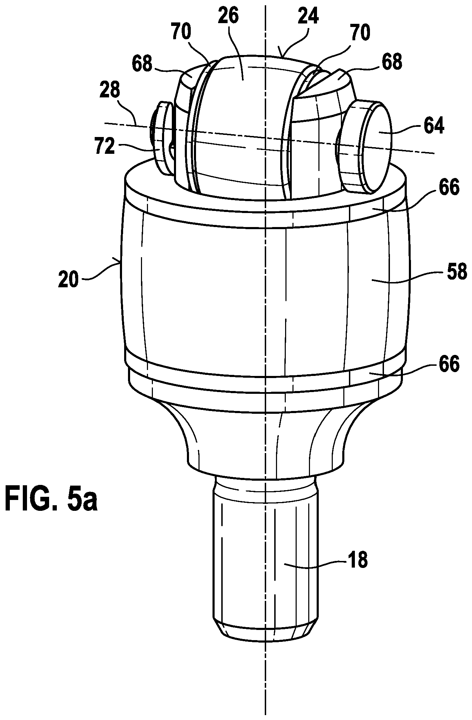

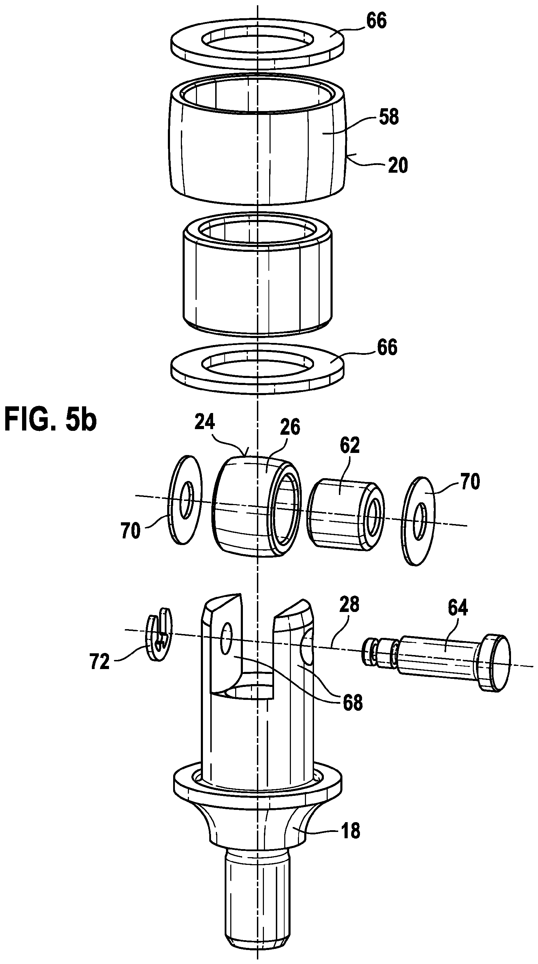

Das Abtriebselement 18 ist als Abtriebsbolzen ausgebildet (Figur 5a). Das Abtriebselement 18 ist fest mit dem als Tellerrad ausgebildeten Getriebeelement 54 verbunden. Das Abtriebselement 18 ist relativ zu einer Rotationsachse des Getriebeelements 54 exzentrisch an dem Getriebeelement 54 angeordnet. Das Abtriebselement 18 ist in eine Ausnehmung im Getriebeelement 54 eingepresst. Die Kulisseneinheit 16 umfasst zumindest ein Wälzelement 58, das zumindest teilweise die zumindest eine Kontaktfläche 20 zur Einleitung der Hubbewegung bildet. Die Kulisseneinheit 16 umfasst genau ein Wälzelement 58, das die genau eine Kontaktfläche 20 zur Einleitung der Hubbewegung bildet. Das Wälzelement 58 ist an dem Abtriebselement 18 angeordnet. Das Wälzelement 58 ist als Wälzlager ausgebildet. Das Wälzelement 58 ist als Radiallager ausgebildet. Das Wälzelement 58 ist drehbar an dem Abtriebselement 18 gelagert. Das Wälzelement 58 erstreckt sich in Umfangsrichtung um das Abtriebselement 18 herum. Eine Mantelfläche des Wälzelements 58 bildet die Kontaktfläche 20. Das Abtriebselement 18 ist über die Kontaktfläche 20 in der Kulissenbahn, die das Kulissenelement 22 bildet, geführt. In einem Betriebszustand wird das Abtriebselement 18 auf einer Kreisbahn um die Rotationsachse des Getriebeelements 54 herum angetrieben. Dabei bewegt sich das Abtriebselement 18 innerhalb der Kulissenbahn translatorisch relativ zum Kulissenelement 22 und verschiebt das Kulissenelement 22 zudem translatorisch in einer Hubrichtung 36, die senkrecht zu einer Richtung einer translatorischen Relativbewegung des Abtriebselement 18 und des Kulissenelements 22 angeordnet ist. Die Hubrichtung 36 und die Richtung der translatorischen Relativbewegung des Abtriebselements 18 und des Kulissenelements 22 verlaufen jeweils senkrecht zu einer Längsrichtung 30 des Abtriebselements 18. Die Längsrichtung 30 des Abtriebselements 18 verläuft parallel zu einer Einpressrichtung des Abtriebselements 18 in das Getriebeelement 54. Die Bewegung in Hubrichtung 36 wird von dem Kulissenelement 22 auf die Hubstange 56 und somit auf das in der Werkzeugaufnahme 46 gehaltene Einsatzwerkzeug 12 übertragen.

Die Kulisseneinheit 16 weist ferner zumindest eine weitere Kontaktfläche 24 zu einer Erzeugung einer Kraftkomponente zu einer Einleitung der Pendelbewegung auf, die zumindest teilweise an dem Abtriebselement 18 angeordnet ist. Die Kulisseneinheit 16 weist genau eine weitere Kontaktfläche 24 auf, die an dem Abtriebselement 18 angeordnet ist. Die weitere Kontaktfläche 24 ist zumindest teilweise getrennt von der Kontaktfläche 20 ausgebildet. Die weitere Kontaktfläche 24 ist vollständig getrennt von der Kontaktfläche 20 ausgebildet. Die Kulisseneinheit 16 umfasst zumindest ein drehbar gelagertes Wälzelement 26, das zumindest teilweise die Kontaktfläche 24 zu einer Erzeugung einer Kraftkomponente zu einer Einleitung der Pendelbewegung bildet. Die Kulisseneinheit 16 umfasst genau ein drehbar gelagertes Wälzelement 26. Das Wälzelement 26 bildet die Kontaktfläche 24. Das Wälzelement 26 ist relativ zu dem Abtriebselement 18 drehbar gelagert. Das Wälzelement 26 ist an dem Abtriebselement 18 drehbar gelagert. Das Wälzelement 26 ist um eine Achse 28, die senkrecht zur Längsrichtung 30 des Abtriebselements 18 angeordnet ist, drehbar gelagert. Das Wälzelement 26 ist von einer Kugelhülse gebildet. Das Wälzelement 26 ist über ein Wälzlager 62 und einen Lagerungsstift 64 drehbar an dem Abtriebselement 18 gelagert. Das Wälzlager 62 ist als Kugellager ausgebildet. Das von der Kugelhülse gebildete Wälzelement 26 ist auf das Wälzlager 62 aufgepresst. Das Wälzelement 26 ist, in Längsrichtung 30 des Abtriebselement 18 betrachtet, an einem stirnseitigen Ende des Abtriebselement 18 angeordnet.

Zu einer Montage des Abtriebselements 18 wird in einem ersten Schritt das Wälzelement 58 in Längsrichtung 30 des Abtriebselements 18 auf das Abtriebselement 18 aufgeschoben. Das Wälzelement 58 ist dabei, in Längsrichtung 30 des Abtriebselements 18 betrachtet, zwischen zwei Distanzscheiben 66 angeordnet. In einem weiteren Schritt wird das von der Kugelhülse gebildete Wälzelement 26 auf das Wälzlager 62 aufgepresst. Anschließend wird das Wälzelement 26 mit dem Wälzlager 62 zwischen zwei Lagerungsfortsätzen 68 des Abtriebselements 18 angeordnet. Zwischen jeweils einem der Lagerungsfortsätzen 68 des Abtriebselements 18 und dem Wälzelement 26 mit dem Wälzlager 62 ist jeweils eine Distanzscheibe 70 angeordnet. Die Lagerungsfortsätze 68 des Abtriebselements 18 weisen jeweils eine kreisförmige Ausnehmung auf. In einem weiteren Schritt wird der Lagerungsstift 64, senkrecht zur Längsrichtung 30 des Abtriebselements 18 betrachtet, durch die Ausnehmungen der Lagerungsfortsätze 68 des Abtriebselements 18 sowie durch die Distanzscheiben 70 und das Wälzlager 62, auf dem das Wälzelement 26 aufgepresst ist, geschoben. In einer Endposition des Lagerungsstifts 64 liegt ein Kopfbereich des Lagerungsstifts 64 an einem der Lagerungsfortsätze 68 des Abtriebselements 18 an. Ein dem Kopfbereich des Lagerungsstifts 64 abgewandtes Ende des Lagerungsstifts 64 ragt aus der Ausnehmung des anderen der Lagerungsfortsätze 68 des Abtriebselements 18 heraus und wird mit einem Sicherungsring 72 gegen ein Herausrutschen gesichert. Das fertig montierte Abtriebselement 18 wird anschließend in die Ausnehmung im von dem Tellerrad gebildeten Getriebeelement 54 eingepresst. Das Abtriebselement 18 wird mit einem Ende in das Getriebeelement 54 eingepresst, das dem Wälzelement 26, in Längsrichtung 30 des Abtriebselements 18 betrachtet, gegenüberliegend angeordnet ist.

Die Getriebevorrichtung 10 weist zumindest ein Lagerelement 32 zu einer Lagerung des Kulissenelements 22 auf, an dem zumindest eine Kontaktfläche 34 angeordnet ist, die in zumindest einem Betriebsmodus die an dem Abtriebselement 18 angeordnete weitere Kontaktfläche 24 zur Erzeugung der Kraftkomponente zur Einleitung der Pendelbewegung zumindest teilweise kontaktiert. Die Getriebevorrichtung 10 weist genau ein Lagerelement 32 auf. Die Getriebevorrichtung 10 kann auch mehrere Lagerelemente 32 umfassen. Das Lagerelement 32 ist zu einer indirekten Lagerung des Kulissenelements 22 vorgesehen. Das Lagerelement 32 ist als Lagerungswippe ausgebildet. Das Lagerelement 32 weist zumindest ein Axiallager 74 zur Lagerung der Hubstange 56 und des damit verbundenen Kulissenelements 22 auf. Das Lagerelement 32 weist zwei Axiallager 74 auf. Es ist jedoch eine andere, einem Fachmann als sinnvoll erscheinende Anzahl der Axiallager 74 denkbar. Die Hubstange 56 und das Kulissenelement 22 sind relativ zu dem Lagerelement 32 in Hubrichtung 36 verschiebbar gelagert. Das Lagerelement 32 ist relativ zu einem Gehäuse 76 der Handwerkzeugmaschine 14, die die Getriebevorrichtung 10 umfasst, bewegbar gelagert. Das Lagerelement 32 ist relativ zu dem Gehäuse 76 der Handwerkzeugmaschine 14 schwenkbar gelagert. Das Lagerelement 32 lagert die Hubstange 56 relativ zu dem Gehäuse 76 der Handwerkzeugmaschine 14 schwenkbar. Das Lagerelement 32 ist zumindest teilweise aus Metall gebildet. Das Lagerelement 32 ist vollständig aus Metall gebildet.

An dem Lagerelement 32 ist genau eine Kontaktfläche 34 zur Kontaktierung der von dem Wälzelement 26 gebildeten Kontaktfläche 24 angeordnet. Es sind jedoch auch mehrere Kontaktflächen 34 denkbar. Die an dem Lagerelement 32 angeordnete Kontaktfläche 34 ist um zumindest eine Achse geneigt, wobei die Achse in einer Ebene verläuft, deren Flächennormale parallel zur Längsrichtung 30 des Abtriebselements 18 angeordnet ist. Ferner ist die Achse, um die die Kontaktfläche 34 geneigt angeordnet ist, schräg zur Hubrichtung 36 der Hubstange 56 bei der Hubbewegung angeordnet. Die Kontaktfläche 34 ist von einer Ebene gebildet. Eine Flächennormale der Kontaktfläche 34 ist schräg zur Längsrichtung 30 des Abtriebselements 18 angeordnet. An dem Lagerelement 32 ist ferner zumindest ein Kontaktelement 38 angeordnet, das zumindest teilweise die Kontaktfläche 34 bildet. An dem Lagerelement 32 ist genau ein Kontaktelement 38 angeordnet, das die Kontaktfläche 34 vollständig bildet. Das Kontaktelement 38 ist von einer Scheibe gebildet. Das Kontaktelement 38 weist eine kreisringförmige Grundfläche auf. Das Kontaktelement 38 ist verliersicher mit dem Lagerelement 32 verbunden. Das Kontaktelement 38 ist kraftschlüssig mit dem Lagerelement 32 verbunden. Das Kontaktelement 38 ist in eine Ausnehmung im Lagerelement 32 eingepresst. Es ist jedoch auch denkbar, dass das Kontaktelement 38 auf eine andere, einem Fachmann als sinnvoll erscheinende Weise, wie beispielsweise durch Kleben, Löten und/oder Schweißen, durch einen Formschluss, durch eine Schraub- oder Nietverbindung, durch eine Klemmverbindung oder durch eine einstückige Ausgestaltung, mit dem Lagerelement 32 verbunden ist. Das Kontaktelement 38 ist zumindest teilweise aus Metall gebildet. Das Kontaktelement 38 ist vollständig aus Metall gebildet. Das Kontaktelement 38 ist aus gehärtetem Metall gebildet.

In einem Betriebszustand rollt das Wälzelement 26 an der Kontaktfläche 34, die an dem Lagerelement 32 angeordnet ist, ab. Eine Abrollrichtung 60 des Wälzelements 26 verläuft tangential zu einer Umfangsrichtung des Kontaktelements 38. Das Lagerelement 32 wird durch eine Kraft zumindest eines Federelements 42, oder alternativ durch die Gewichtskraft, im Bereich des Kontaktelements 38 zu dem Wälzelement 26 hin beaufschlagt. Das Lagerelement 32 wird somit an das Abtriebselement 18 gedrückt, um die Kontaktierung der Kontaktflächen 24, 34 zu erreichen. In einem Betriebszustand bewegt sich das Abtriebselement 18 durch die Rotation des vom Tellerrad gebildeten Getriebeelements 54 entlang der Umfangsrichtung des Getriebeelements 54. Dabei rollt das am Abtriebselement 18 angeordnete Wälzelement 26 an dem Kontaktelement 38, das an dem Lagerelement 32 angeordnet ist, ab. Dadurch wird das Kontaktelement 38, dessen Flächennormale einen Winkel größer als 0 ° und kleiner als 90 ° mit der Längsrichtung 30 des Abtriebselements 18 einschließt, von dem Wälzelement 26 in Längsrichtung 30 verschoben, wodurch das Lagerelement 32, an dem das Kontaktelement 38 angeordnet ist, um eine Lagerdrehachse 78 geschwenkt wird. Diese Schwenkbewegung des Lagerelements 32 wird auf die Hubstange 56 und somit auf das Einsatzwerkzeug 12 übertragen, wodurch die Pendelbewegung des Einsatzwerkzeugs 12 erreicht wird.

Die Hubbewegung wird in einem Schritt über die Kontaktfläche 20, die am Abtriebselement 18 angeordnet ist, erzeugt. Die Pendelbewegung wird in einem weiteren Schritt über die weitere Kontaktfläche 24, die am Abtriebselement 18 angeordnet ist, erzeugt. Der Schritte zur Erzeugung der Hubbewegung und der Pendelbewegung werden in zumindest einem Antriebsmodus zeitgleich vorgesehen. Die Pendelbewegung und die Hubbewegung werden in einem Betriebszustand in zumindest einem Antriebsmodus überlagert. Die Hubbewegung weist einen Hub von 32 mm auf. Die Pendelhubbewegung weist einen Hub von 4 mm auf, wobei ein Schwenken um 3° bis 4° vorgesehen ist.

Zwischen der Lagerdrehachse 78, um die das Lagerelement 32 schwenkbar gelagert ist, und der Kontaktfläche 24 zur Erzeugung der Pendelbewegung, die am Abtriebselement 18 angeordnet ist, ist, in Längsrichtung 30 des Abtriebselements 18 betrachtet, ein Versatz vorgesehen, sodass die Erzeugung der Pendelbewegung auch dann möglich ist, wenn die Kontaktfläche 34, die am Lagerelement 32 angeordnet ist, senkrecht zur Längsrichtung 30 des Abtriebselements 18 angeordnet ist.

Das Kontaktelement 38 ist, in Hubrichtung 36 betrachtet, asymmetrisch angeordnet, sodass ein, in Längsrichtung 30 des Abtriebselements 18 betrachtet, höchster Punkt einer Abrollbahn des Wälzelements 26 auf dem Kontaktelement 38 senkrecht zur Längsrichtung 30 des Abtriebselements 18 und senkrecht zur Hubrichtung 36 versetzt zu einer Hubachse der Hubstange 56 angeordnet ist. Dadurch erreichen die Pendelbewegung des Einsatzwerkzeugs 12 und die Hubbewegung des Einsatzwerkzeugs 12 einen Umkehr- bzw. Totpunkt zeitversetzt.

Die Getriebevorrichtung 10 weist zumindest eine Einstelleinheit 40 zu einem Umschalten zwischen zumindest zwei Antriebsmodi zumindest teilweise durch eine Verschiebung des Lagerelements 32 relativ zum Abtriebselement 18 auf (Figur 3). Die Getriebevorrichtung 10 weist genau eine Einstelleinheit 40 auf. Es ist jedoch auch eine andere, einem Fachmann als sinnvoll erscheinende Anzahl der Einstelleinheiten 40 denkbar. Die Einstelleinheit 40 ist zu einem Umschalten zwischen drei Antriebsmodi vorgesehen. Es ist jedoch auch ein Umschalten zwischen einer anderen Anzahl von Antriebsmodi denkbar. Die Einstelleinheit 40 ist zu einem Umschalten zwischen den Antriebsmodi durch eine Verschiebung des Lagerelements 32 zumindest teilweise parallel zur Längsrichtung 30 des Abtriebselements 18 vorgesehen. Die Einstelleinheit 40 umfasst zumindest ein Bedienelement 80 zu einer manuellen Bedienung durch den Bediener der Handwerkzeugmaschine 14. Die Einstelleinheit 40 umfasst genau ein Bedienelement 80. Die Einstelleinheit 40 kann jedoch auch mehrere Bedienelemente 80 umfassen. Das Bedienelement 80 ist von einem Drehknopf gebildet. Das Bedienelement 80 ist in dem Gehäuse 76 der Handwerkzeugmaschine 14 integriert und für den Bediener der Handwerkzeugmaschine 14 zugänglich ausgebildet. Das Bedienelement 80 ist in einen Getriebedeckel 82 des Gehäuses 76 der Handwerkzeugmaschine 14 integriert. Der Getriebedeckel 82 ist aus Metall gebildet. Es ist jedoch auch denkbar, dass der Getriebedeckel 82 aus einem faserverstärkten Kunststoff oder einem anderen, einem Fachmann als sinnvoll erscheinenden Material gebildet ist. Das Bedienelement 80 ist aus Kunststoff gebildet. Es ist jedoch auch denkbar, dass das Bedienelement 80 aus einem anderen, einem Fachmann als sinnvoll erscheinenden Material gebildet ist.

Die Einstelleinheit 40 weist zudem ein Übertragungselement 84 auf, das zu einer Übertragung einer Einstellbewegung des Bedienelements 80 auf das Lagerelement 32 vorgesehen ist. Das Übertragungselement 84 ist fest mit dem Bedienelement 80 verbunden. Das Übertragungselement 84 ist als Querbolzen ausgebildet. Das Übertragungselement 84 weist eine Längsrichtung auf, die senkrecht zu einer Drehachse des Bedienelements 80 verläuft. Die Drehachse des Bedienelements 80, um die das Bedienelement 80 zum Umschalten drehbar ist, verläuft parallel zur Längsrichtung 30 des Abtriebselements 18. Das Übertragungselement 84 ist aus Metall gebildet. Das Übertragungselement 84 kontaktiert das Lagerelement 32 an einer Einstellkontaktfläche 86. Die Einstellkontaktfläche 86 weist eine Flächennormale auf, die schräg zur Drehachse des Bedienelements 80 verläuft. Die Einstellkontaktfläche 86 ist kreisringförmig ausgebildet. Die Einstellkontaktfläche 86 ist, in Radialrichtung betrachtet, radial innerhalb der Kontaktfläche 34, die von dem Kontaktelement 38 gebildet ist, und, in Längsrichtung 30 des Abtriebselements 18 betrachtet, versetzt zur Kontaktfläche 34, die von dem Kontaktelement 38 gebildet ist, angeordnet.

Die Getriebevorrichtung 10 weist das zumindest eine Federelement 42 auf, das das Lagerelement 32 in zumindest eine parallel zur Längsrichtung 30 des Abtriebselements 18 verlaufende Richtung mit einer Kraft beaufschlagt bzw. vorspannt. Die Getriebevorrichtung 10 weist mehrere Federelemente 42 auf, die zwischen dem Getriebedeckel 82 des Gehäuses 76 der Handwerkzeugmaschine 14 und dem Lagerelement 32 angeordnet sind. Die Federelemente 42 sind jeweils von einer Schraubenfeder gebildet. Die Federelemente 42 sind auf einer dem Kontaktelement 38, in Längsrichtung 30 des Abtriebselements 18 betrachtet, gegenüberliegenden Seite des Lagerelements 32 angeordnet. Die Federelemente 42 drücken das Lagerelement 32 mit der Kontaktfläche 34, die von dem Kontaktelement 38 gebildet ist, zu dem Abtriebselement 18 hin. Zur Einleitung der Pendelbewegung bewegt das an dem Abtriebselement 18 angeordnete Wälzelement 26 das Lagerelement 32 im Betriebszustand entgegen der Kraft der Federelemente 42. Ferner drücken die Federelemente 42 das Lagerelement 32 mit der Einstellkontaktfläche 86 gegen das Übertragungselement 84 der Einstelleinheit 40.

Durch ein Drehen des Bedienelements 80 und somit des Übertragungselements 84 verläuft das Übertragungselement 84 entlang der schräg angeordneten Einstellkontaktfläche 86 des Lagerelements 32, wodurch das Lagerelement 32 relativ zum Abtriebselement 18 entgegen der Kraft der Federelemente 42 verschoben wird. In einem ersten Antriebsmodus, der als Pendelmodus ausgebildet ist, liegt das Wälzelement 26 in einem Betriebszustand dauerhaft an dem Kontaktelement 38 an und rollt vollständig an dem Kontaktelement 38 ab. Das Übertragungselement 84 kontaktiert dabei einen dem Abtriebselement 18 am nächsten liegenden Punkt der Einstellkontaktfläche 86. Im ersten Antriebsmodus erzeugt die Getriebevorrichtung 10 eine Pendelhubbewegung.

Durch ein Drehen des Bedienelements 80 wird das Übertragungselement 84 entlang der schräg angeordneten Einstellkontaktfläche 86 des Lagerelements 32 verschoben, wodurch das Lagerelement 32 entgegen der Kraft der Federelemente 42 parallel zur Längsrichtung 30 des Abtriebselements 18 zu dem Getriebedeckel 82 hin und von dem Abtriebselement 18 weg verschoben wird. Das Lagerelement 32 schwenkt dabei um die Lagerdrehachse 78. In diesem zweiten Antriebsmodus kontaktiert das an dem Abtriebselement 18 angeordnete Wälzelement 26 das Kontaktelement 38 in einem Betriebszustand nur entlang eines Teils einer Umlaufbahn des Abtriebselements 18 und rollt nur teilweise bzw. zeitweise an dem Kontaktelement 38 ab. Entlang eines Teils der Umlaufbahn des Abtriebselements 18 ist das Wälzelement 26 in dem zweiten Antriebsmodus beabstandet zum Kontaktelement 38 angeordnet. In dem zweiten Antriebszustand erzeugt die Getriebevorrichtung 10 eine Hubbewegung mit einer teilweisen Überlagerung einer Pendelbewegung.

Durch ein weiteres Drehen des Bedienelements 80 wird das Übertragungselement 84 entlang der schräg angeordneten Einstellkontaktfläche 86 des Lagerelements 32 weiter verschoben, wodurch das Lagerelement 32 entgegen der Kraft der Federelemente 42 parallel zur Längsrichtung 30 des Abtriebselements 18 weiter zu dem Getriebedeckel 82 hin und von dem Abtriebselement 18 weg verschoben wird. Das Lagerelement 32 schwenkt dabei um die Lagerdrehachse 78. In diesem dritten Antriebsmodus ist das an dem Abtriebselement 18 angeordnete Wälzelement 26 entlang der kompletten Umlaufbahn des Abtriebselements 18 beabstandet zu dem Kontaktelement 38 angeordnet. In dem dritten Antriebszustand erzeugt die Getriebevorrichtung 10 eine reine Hubbewegung.

## Patentansprüche

1. Getriebevorrichtung zu einer Erzeugung einer Hub- und/oder Pendelbewegung eines Einsatzwerkzeugs (12) einer Handwerkzeugmaschine (14), mit zumindest einer Kulisseneinheit (16) zu einer Erzeugung der Hubbewegung, die zumindest ein Abtriebselement (18) mit zumindest einer Kontaktfläche (20), die zumindest teilweise an dem zumindest einen Abtriebselement (18) angeordnet ist, und zumindest ein Kulissenelement (22), das über die zumindest eine Kontaktfläche (20) mit dem zumindest einen Abtriebselement (18) zusammenwirkt, umfasst, **dadurch gekennzeichnet, dass** die zumindest eine Kulisseneinheit (16) zumindest eine weitere Kontaktfläche (24) zu einer Erzeugung einer Kraftkomponente zu einer Einleitung der Pendelbewegung umfasst, die zumindest teilweise an dem zumindest einen Abtriebselement (18) angeordnet ist.

2. Getriebevorrichtung nach Anspruch 1, **dadurch gekennzeichnet, dass** die zumindest eine Kulisseneinheit (16) zumindest ein drehbar gelagertes Wälzelement (26) umfasst, das zumindest teilweise die zumindest eine Kontaktfläche (24) zu einer Erzeugung einer Kraftkomponente zu einer Einleitung der Pendelbewegung bildet.

3. Getriebevorrichtung nach Anspruch 2, **dadurch gekennzeichnet, dass** das zumindest eine Wälzelement (26) um eine Achse (28), die senkrecht zu einer Längsrichtung (30) des zumindest einen Abtriebselements (18) angeordnet ist, drehbar gelagert ist.

4. Getriebevorrichtung nach Anspruch 2, **dadurch gekennzeichnet, dass** das zumindest eine Wälzelement (26) von einer Kugelhülse gebildet ist.

5. Getriebevorrichtung nach einem der vorhergehenden Ansprüche, **gekennzeichnet durch** zumindest ein Lagerelement (32) zu einer Lagerung des zumindest einen Kulissenelements (22), an dem zumindest eine Kontaktfläche (34) angeordnet ist, die in zumindest einem Betriebsmodus die an dem zumindest einen Abtriebselement (18) angeordnete Kontaktfläche (24) zu einer Erzeugung einer Kraftkomponente zu einer Einleitung der Pendelbewegung zumindest teilweise kontaktiert.

6. Getriebevorrichtung nach Anspruch 5, **dadurch gekennzeichnet, dass** die zumindest eine an dem zumindest einen Lagerelement (32) angeordnete Kontaktfläche (34) um zumindest eine Achse geneigt ist, wobei die Achse in einer Ebene verläuft, deren Flächennormale parallel zu einer Längsrichtung (30) des zumindest einen Abtriebselements (18) angeordnet ist, und wobei die Achse schräg zu einer Hubrichtung (36) verläuft.

7. Getriebevorrichtung nach Anspruch 5, **dadurch gekennzeichnet, dass** an dem zumindest einen Lagerelement (32) zumindest ein Kontaktelement (38) angeordnet ist, das zumindest teilweise die zumindest eine Kontaktfläche (34) bildet.

8. Getriebevorrichtung nach Anspruch 5, **gekennzeichnet durch** zumindest eine Einstelleinheit (40) zu einem Umschalten zwischen zumindest zwei Antriebsmodi zumindest teilweise durch eine Verschiebung des zumindest einen Lagerelements (32) relativ zu dem zumindest einen Abtriebselement (18).

9. Getriebevorrichtung nach Anspruch 5 **gekennzeichnet durch** zumindest ein Federelement (42), das das zumindest eine Lagerelement (32) in zumindest eine parallel zu einer Längsrichtung (30) des zumindest einen Abtriebselements (18) verlaufende Richtung mit einer Kraft beaufschlagt.

10. Handwerkzeugmaschine mit zumindest einer Getriebevorrichtung (10) nach einem der vorhergehenden Ansprüche.

11. Verfahren zu einer Erzeugung einer Hub- und/oder Pendelbewegung eines Einsatzwerkzeugs (12) einer Handwerkzeugmaschine (14) durch eine Getriebevorrichtung (10) nach einem der Ansprüche 1 bis 9, **dadurch gekennzeichnet, dass** in zumindest einem Schritt eine Hubbewegung über zumindest eine Kontaktfläche (20), die an zumindest einem Abtriebselement (18) angeordnet ist, erzeugt wird und dass in zumindest einem weiteren Schritt eine Pendelbewegung über zumindest eine weitere Kontaktfläche (24), die an dem zumindest einen Abtriebselement (18) angeordnet ist, erzeugt wird.

## Claims

1. Transmission device for generating a stroke motion and/or reciprocating motion of an insert tool (12) of a hand-held power tool (14), having at least one link unit (16), for generating the stroke motion, which comprises at least one output element (18) having at least one contact surface (20) that is disposed, at least partially, on the at least one output element (18), and at least one link element (22), which acts in combination with the at least one output element (18) via the at least one contact surface (20), **characterized in that** the at least one link unit (16) comprises at least one further contact surface (24), for generating a force component for initiating the reciprocating motion, that is disposed, at least partially, on the at least one output element(18).

2. Transmission device according to Claim 1, **characterized in that** the at least one link unit (16) comprises at least one rotatably mounted rolling element (26), which constitutes, at least partially, the at least one contact surface (24) for generating a force component for initiating the reciprocating motion.

3. Transmission device according to Claim 2, **characterized in that** the at least one rolling element (26) is mounted so as to be rotatable about an axis (28) that is perpendicular to a longitudinal direction (30) of the at least one output element (18).

4. Transmission device according to Claim 2, **characterized in that** the at least one rolling element (26) is constituted by a ball bush.

5. Transmission device according to any one of the preceding claims, **characterized by** at least one bearing element (32), for supporting the at least one link element (22), on which is disposed at least one contact surface (34) that, in at least one operating mode, at least partially contacts the contact surface (24), disposed on the at least one output element (18), for generating a force component for initiating the reciprocating motion.

6. Transmission device according to Claim 5, **characterized in that** the at least one contact surface (34) disposed on the at least one bearing element (32) is inclined about at least one axis, the axis extending in a plane, the surface normal of which is disposed parallel to a longitudinal direction (30) of the at least one output element (18), and the axis extending obliquely in relation to a stroke direction (36).

7. Transmission device according to Claim 5, **characterized in that** at least one contact element (38), which at least partially constitutes the at least one contact surface (34), is disposed on the at least one bearing element (32).

8. Transmission device according to Claim 5, **characterized by** at least one setting unit (40) for switching over between at least two driving modes, at least partially by displacement of the at least one bearing element (32) relative to the at least one output element (18).

9. Transmission device according to Claim 5, **characterized by** at least one spring element (42), which applies a force to the at least one bearing element (32) in at least one direction parallel to a longitudinal direction (30) of the at least one output element (18).

10. Hand-held power tool having at least one transmission device (10) according to any one of the preceding claims.

11. Method for generation of a stroke motion and/or reciprocating motion of an insert tool (12) of a hand-held power tool (14) by a transmission device (10) according to any one of Claims 1 to 9, **characterized in that,** in at least one step, a stroke motion is generated by means of at least one contact surface (20), which is disposed on at least one output element (18), and, in least one further step, a reciprocating motion is generated by means of at least one further contact surface (24), which is disposed on the at least one output element (18).

## Revendications

1. Transmission pour la production d'un mouvement rectiligne et/ou oscillant d'un outil d'insertion (12) d'une machine-outil à main (14), avec au moins une unité de coulisse (16) pour la production du mouvement rectiligne, qui comprend au moins un élément de sortie (18) avec au moins une face de contact (20), qui est disposée au moins en partie sur ledit au moins un élément de sortie (18), et au moins un élément de coulisse (22), qui coopère avec ledit au moins un élément de sortie (18) par l'intermédiaire de ladite au moins une face de contact (20), **caractérisée en ce que** ladite au moins une unité de coulisse (16) comprend au moins une autre face de contact (24) pour la production d'une composante de force destinée à générer le mouvement oscillant, qui est disposée au moins en partie sur ledit au moins un élément de sortie (18).

2. Transmission selon la revendication 1, **caractérisée en ce que** ladite au moins une unité de coulisse (16) comprend au moins un élément de roulement (26) monté de façon rotative, qui forme au moins en partie ladite au moins une face de contact (24) pour la production d'une composante de force destinée à générer le mouvement oscillant.

3. Transmission selon la revendication 2, **caractérisé en ce que** ledit au moins un élément de roulement (26) est monté de façon rotative autour d'un axe (28), qui est disposé perpendiculairement à une direction longitudinale (30) dudit au moins un élément de sortie (18) .

4. Transmission selon la revendication 2, **caractérisée en ce que** ledit au moins un élément de roulement (26) est formé par un manchon sphérique.

5. Transmission selon l'une quelconque des revendications précédentes, **caractérisée par** au moins un élément de palier (32) pour l'appui dudit au moins un élément de coulisse (22), sur lequel est disposée au moins une face de contact (34), qui dans au moins un mode de fonctionnement contacte au moins en partie la face de contact (24) disposée sur ledit au moins un élément de sortie (18) pour la production d'une composante de force destinée à générer le mouvement oscillant.

6. Transmission selon la revendication 5, **caractérisée en ce que** ladite au moins une face de contact (34) disposée sur ledit au moins un élément de palier (32) est inclinée autour d'au moins un axe, dans laquelle l'axe s'étend dans un plan, dont la normale à la surface est disposée parallèlement à une direction longitudinale (30) dudit au moins un élément de sortie (18), et dans laquelle l'axe s'étend en oblique par rapport à une direction de course (36).

7. Transmission selon la revendication 5, **caractérisée en ce qu'**au moins un élément de contact (38), qui forme au moins en partie ladite au moins une face de contact (34), est disposé sur ledit au moins un élément de palier (32) .

8. Transmission selon la revendication 5, **caractérisée par** au moins une unité de réglage (40) pour la commutation entre au moins deux modes d'entraînement au moins en partie par un déplacement dudit au moins un élément de palier (32) par rapport audit au moins un élément de sortie (18).

9. Transmission selon la revendication 5, **caractérisée par** au moins un élément de ressort (42), qui agit avec une force sur ledit au moins un élément de palier (32) dans au moins une direction s'étendant parallèlement à une direction longitudinale (30) dudit au moins un élément de sortie (18).

10. Machine-outil à main avec au moins une transmission (10) selon l'une quelconque des revendications précédentes.

11. Procédé de production d'un mouvement rectiligne et/ou oscillant d'un outil d'insertion (12) d'une machine-outil à main (14) au moyen d'une transmission (10) selon l'une quelconque des revendications 1 à 9, **caractérisé en ce que** dans au moins une étape on produit un mouvement rectiligne au moyen d'au moins une face de contact (20), qui est disposée sur au moins un élément de sortie (18) et **en ce que** dans au moins une autre étape on produit un mouvement oscillant au moyen d'au moins une autre face de contact (24), qui est disposée sur ledit au moins un élément de sortie (18).
